# EUROPÄISCHE PATENTANMELDUNG

(11) **EP 4 193 833 A1**
(43) Veröffentlichungstag der Anmeldung: **14.06.2023**
(21) Anmeldenummer: 21213405.0
(22) Anmeldetag: 09.12.2021
(51) Int. Cl.: A01K 31/12

(54) **SITZSTANGE FÜR VÖGEL FÜR ANLAGE ZUR BEKÄMPFUNG VON PARASITEN UND MIKROWELLENGESTÜTZTE ANLAGE ZUR BEKÄMPFUNG VON PARASITEN**

(71) Anmelder: LES GmbH, 72186 Empfingen (DE)
(72) Erfinder: Lenz, Heiko, 72401 Haigerloch (DE); Kramer, Raphael, 72401 Haigerloch (DE); Gallatz, Armin, 72186 Empfingen (DE); Gallatz, Volker, 72172 Sulz-Bergfelden (DE)
(74) Vertreter: Witte, Weller & Partner Patentanwälte mbB

(57) **Zusammenfassung**

Die Erfindung betrifft eine Sitzstange (12) für zumindest einen Vogel zur Verwendung in einer Anlage (1) zur Bekämpfung von milbenartigen oder lausartigen Parasiten bei Vögeln mittels Mikrowellenstrahlung, mit einen Mikrowellenhohlleiter in Form eines mehrkomponentigen Rohres (17), dessen Querschnitt in radialer Richtung aus zumindest zwei Komponenten unterschiedlichen Festkörpermaterials gebildet ist, wobei zumindest ein erster Komponententyp aus einem dielektrischen Festkörpermaterial gebildet wird und ein weiterer, zweiter Komponententyp aus einem elektrisch leitfähigen Material gebildet wird und wobei die innerste radiale Komponente des Rohres eine Komponente vom ersten Typ ist und sich zumindest eine Ausnehmung (13) von einem Außenraum in einen freien, zentralen Innenraum (20) des Rohres (17) erstreckt und die Ausnehmung (13) einen Querschnitt aufweist, der verhindert, dass Mikrowellenstrahlung aus dem Rohr (17) in die Umgebung gelangt. Zudem betrifft die Erfindung eine Anlage (1) zur Bekämpfung von milbenartigen oder lausartigen parasitären Lebensformen bei Vögeln, insbesondere bei in der Nutztierhaltung gehaltenen Vögeln, unter Verwendung von Mikrowellenstrahlung mit zumindest einer Vorrichtung zur Erzeugung von Mikrowellenstrahlung (2) und Mitteln (3, 4, 9, 10, 11) zur Führung von Mikrowellenstrahlung von dem Mittel zur Erzeugung von Mikrowellenstrahlung (2) zu einem oder mehreren von dem Mittel zur Erzeugung von Mikrowellenstrahlung (2) räumlich entfernen Orten.

## Beschreibung

Die Erfindung betrifft eine Sitzstange für zumindest einen Vogel zur Verwendung in einer Anlage zur Bekämpfung von milbenartigen oder lausartigen Parasiten bei Vögeln mittels Mikrowellenstrahlung.

Des Weiteren betrifft die Erfindung eine Anlage zur Bekämpfung von milbenartigen oder lausartigen parasitären Lebensformen bei Vögeln, insbesondere bei in der Nutztierhaltung in Zuchtbetrieben, Mastbetrieben, vogeleiproduzierenden Betrieben oder dergleichen gehaltenen Vögeln, unter Verwendung von Mikrowellenstrahlung mit zumindest einer Vorrichtung zur Erzeugung von Mikrowellenstrahlung und Mitteln zur Führung von Mikrowellenstrahlung von dem Mittel zur Erzeugung von Mikrowellenstrahlung zu einem oder mehreren von dem Mittel zur Erzeugung von Mikrowellenstrahlung räumlich entfernen Orten.

Bei der Haltung von Vögeln, vor allen Dingen bei der gewerblichen Haltung von Vögeln in Großbetrieben etwa zur Produktion von Hühnereiern oder in der Geflügelzucht, ist ein wesentliches Problem der Befall der Tiere mit Ektoparasiten. Zur Minderung des Einsatzes von Chemikalien wird in der EP 2 642 848 B1 vorgeschlagen, elektromagnetische Strahlung zu verwenden. Dort wird eine Vorrichtung und ein Verfahren zur Bekämpfung von Parasiten in einer Behausung für Vögel unter Verwendung eines länglichen Hohlkörpers zur Bekämpfung von Parasiten in einer Behausung für Vögel, mit mindestens einer Öffnung in der Wand des Hohlkörpers zur Aufnahme der Parasiten ins Innere des Hohlkörpers und einem im Inneren des Hohlkörpers lösbar angeordneten Mittel zum Abtöten der Parasiten offenbart. Der Hohlkörper dient zugleich als Sitzstange für Vögel. Indem das Mittel vorbestimmt aktivierbar ist und eine elektromagnetische Strahlung emittiert, werden Parasiten, die sich im Inneren des Hohlkörpers befinden, abgetötet, wobei die Parasiten das Innere des Hohlkörpers selbsttätig als Versteck aufsuchen. In einer Ausgestaltungsvariante ist das Mittel zum Abtöten der Parasiten ein Mikrowellensender, der dementsprechend innerhalb des Hohlkörpers Mikrowellenstrahlung emittiert und zugleich im Inneren des Hohlkörpers selbst angeordnet ist, um die Parasiten dort in Ihrem Versteck abzutöten.

Haushühnervögel werden als Geflügelfleischlieferant und zur Produktion von Hühnereiern in Deutschland und Europa millionenfach gehalten. Die typischerweise für Haushühnervögel verwendete Sitzstange weist einen (Gesamt-)Durchmesser von 32 mm auf. Es also vollkommen unklar, wie ein Mikrowellensender mit hinreichender Leistung in eine als Hohlleiter ausgebildete Sitzstange mit einem vergleichbaren Innendurchmesser integriert werden sollte, um die Parasiten im Inneren der Sitzstange abzutöten. Dabei sollte auch beachtet werden, dass eine solche Vorrichtung möglichst ohne Erhöhung der Komplexität skalieren muss, um in großen Stallungen bei der Haltung sehr vieler Nutztiere auf einmal ebenfalls anwendbar zu sein. Dies ist bei dem in der EP 2 642 848 B1 offengelegten Vorrichtung und Verfahren offensichtlich nicht gegeben. In diesem Fall müssten in großen Stallungen mit zahlreichen Vögeln sehr viele Mikrowellensender in entsprechend ausgebildete, abgeschlossene Sitzstangenelemente integriert und diese in der Stallung angeordnet werden. Die Mikrowellensender müssten alle mit Strom versorgt und gegebenenfalls an eine externe, zentrale Steuerung angeschlossen werde. Der Aufwand für eine Realisierung einer derartigen Einrichtung wäre enorm, insbesondere enorm teuer und dementsprechend nicht wirtschaftlich.

Ausgehend von der beschriebenen Problematik und dem Stand der Technik ist es Aufgabe der vorliegenden Erfindung, eine Möglichkeit der effektiven, kostengünstigen, ebenso biozidfreie wie pestizidfreie Bekämpfung von lausartigen oder milbenartigen Parasiten bei Vögeln wie der Roten Vogelmilbe vorzuschlagen, die die Tiere so wenig wie möglich belastet, keine Störungen in ihrem Tagesablauf zur Folge hat und insbesondere bei großen Vogelpopulationen in der Nutztierhaltung einsetzbar ist.

Die Aufgabe wird gelöst durch eine Sitzstange für zumindest einen Vogel zur Verwendung in einer Anlage zur Bekämpfung von milbenartigen oder lausartigen Parasiten bei Vögeln mittels Mikrowellenstrahlung nach Anspruch 1 und durch eine Anlage zur Bekämpfung von milbenartigen oder lausartigen parasitären Lebensformen bei Vögeln nach Anspruch 13. Weitere vorteilhafte Ausgestaltungsvarianten sind den jeweiligen rückbezogenen Unteransprüchen zu entnehmen.

Demnach weist eine erfindungsgemäße Sitzstange einen Mikrowellenhohlleiter in Form eines mehrkomponentigen Rohres auf, dessen Querschnitt in radialer Richtung aus zumindest zwei Komponenten unterschiedlichen Festkörpermaterials gebildet ist, wobei zumindest ein erster Komponententyp aus einem dielektrischen Festkörpermaterial gebildet wird und ein weiterer, zweiter Komponententyp aus einem elektrisch leitfähigen Material gebildet wird und wobei die innerste radiale Komponente des Rohres eine Komponente vom ersten Typ ist und sich zumindest eine Ausnehmung von einem Außenraum in einen freien, zentralen Innenraum des Rohres erstreckt und die Ausnehmung einen Querschnitt aufweist, der verhindert, dass Mikrowellenstrahlung aus dem Rohr in die Umgebung gelangt.

Viele lausartige und milbenartige Parasiten bevorzugen dunkle, abgeschiedene Verstecke, aus denen heraus sie die Wirte befallen und in die sie sich nach dem Befall wieder zurückziehen und sich verstecken können. Ein solches Versteck bietet der zentrale Innenraum der Sitzstange für Vögel, die im Wesentlichen als mehrkomponentiges, mikrowellenführendes Rohr ausgebildet ist. Dabei ist grundsätzlich die in radialer Richtung ausgehend von der zentralen Symmetrieachse des mehrkomponentigen Rohres innerste, aus einem elektrisch leitfähigen Matetrial gebildete Rohrkomponente, als Mikrowellenhohlleiter ausgebildet. Eventuelle weitere elektrisch leitfähige, in radialer Richtung weiter außen angeordnete Rohrkomponenten sind dabei nicht als Mikrowellenhohlleiter ausgebildet.

Die Parasiten gelangen selbsttätig von einem auf einer erfindungsgemäßen Sitzstange befindlichen Wirtsvogel durch die Ausnehmung(en) in den zentralen Innenraum der Sitzstange. Der Nutzen des zentralen Innenraums der Sitzstange als Versteck für die Parasiten wird noch zusätzlich durch die unmittelbare Nähe zu dem oder den Wirtsvögeln auf der Sitzstange begünstigt, so dass die Parasiten von einem auf der Sitzstange befindlichen Wirtsvogel in das Versteck nur eine möglichst kurze Wegstrecke zurücklegen müssen. Im zentralen Innenraum einer erfindungsgemäßen Sitzstange befindliche Parasiten können dort abgetötet werden. Dazu ist Mikrowellenstrahlung in die Sitzstange einkoppelbar, wodurch mittels Anregung von Wassermolekülen durch die Mikrowellenstrahlung die Temperatur der körpereigenen wasserbasierten Flüssigkeiten der Parasiten so weit erhitzt werden kann, dass die Parasiten absterben. Die Frequenz der Mikrowellenstrahlung muss dazu so gewählt werden, dass ein entsprechender Energieübertrag durch Wechselwirkung der Mikrowellenstrahlung mit den Wassermolekülen stattfindet oder stattfinden kann.

Durch die Ausbildung der Sitzstange als Mikrowellenhohlleiter werden die Parasiten in der Sitzstange ohne irgendeine Beeinträchtigung und/oder Störung der auf der Sitzstange befindlichen oder sich in der Umgebung der etwa in einer Stallung, einem Unterstand, einer Voliere oder dergleichen befindlichen Vögel abgetötet. Auch sich in der Umgebung einer erfindungsgemäßen Sitzstange aufhaltende Menschen wie etwa Stallpersonal erfahren keinerlei Beeinträchtigung, insbesondere auch dann nicht, wenn sich Menschen zu einem Zeitpunkt, an dem Mikrowellenstrahlung in die Sitzstange eingekoppelt wird, in der Umgebung de Sitzstange aufhalten sollten. Dabei ist wesentlich, dass die Ausnehmung(en) in einer erfindungsgemäßen Sitzstange so ausgebildet sind, dass keine Mikrowellenstrahlung in den Außenraum gelangen kann. Die maximale Größe des Querschnitts der Ausnehmungen muss dazu signifikant kleiner als die Hohlleiterwellenlänge der in den Mikrowellenhohlleiter der Sitzstange eingekoppelten oder einkoppelbaren Mikrowellenstrahlung sein. Die exakte Form der Querschnittsfläche der Ausnehmung(en) ist hingegen von untergeordneter Bedeutung, aus praktischen Gründen werden Ausnehmungen mit kreisförmigem Querschnitt vorgeschlagen.

Durch die Verwendung von Mikrowellenstrahlung zum Abtöten der Parasiten kann auf die bekannten und vielfach verwendeten, aber mit den zahlreichen Nachteilen behafteten Bekämpfungsmethoden wie Akarizide und Silikatstaub verzichtet werden. Dadurch wird die gesundheitliche Belastung für Mensch und Vogel erheblich reduziert.

Eine erfindungsgemäße Sitzstange kann dauerhaft etwa in einer Stallung, einem Unterstand, einer Voliere oder dergleichen für Vögel installiert werden. Es wird vorgeschlagen, dass die Einkopplung von Mikrowellenstrahlung in eine derartige Sitzstange nicht permanent, sondern lediglich etwa in bestimmten Intervallen für einen begrenzten Zeitraum erfolgt. Die Intervalle ergeben sich dann etwa aus den Zeiträumen, in denen sich nach einer bereits erfolgten, vorhergehenden Einkopplung von Mikrowellenstrahlung wieder eine gewisse Milbenpopulation innerhalb der Sitzstange angesammelt bzw. ausgebildet hat. Die Dauer der Bestrahlung kann sich dann danach richten, wie lange das Abtöten fast aller Milben der Milbenpopulation mittels der eingekoppelten Mikrowellenstrahlung typischerweise andauert. Eine permanente Einkopplung von Mikrowellenstrahlung wird aus Gründen der Kosten aufgrund des Energieverbrauchs als nachteilig angesehen und ist zur effektiven und wirtschaftlichen Minimierung des Parasitenproblems auch nicht notwendig.

Es wird vorgeschlagen, dass die als Mikrowellenhohlleiter ausgebildete Komponente einer erfindungsgemäßen Sitzstange hinsichtlich ihres inneren Querschnitts gemäß einem aus der Hochfrequenztechnik bekannten und gebräuchlichen Querschnittsformen und Querschnittsgrößen ausgebildet ist, wobei insbesondere ein rechteckiger Querschnitt, ein ovaler Querschnitt und dabei im Speziellen ein kreisrunder Querschnitt zu nenne wäre. Letzterer kreisrunder Querschnitt wird dabei besonders präferiert. Die äußere Querschnittsform der als Mikrowellenhohlleiter ausgebildeten Komponente einer erfindungsgemäßen Sitzstange kann der Form des inneren Querschnitts entsprechen, jedoch ist auch eine Abweichung davon möglich, insbesondere wenn eine erfindungsgemäße Sitzstange eine den besonderen Bedürfnissen einer bestimmten Vogelart eine von der typischen äußeren Querschnittsform eines gebräuchlichen Mikrowellenhohlleiters (rechteckig, oval, kreisrund) abweichende Form aufweisen soll, um Vögeln der entsprechenden Art etwa einen verbesserten Halt auf einer derartig ausgebildeten Sitzstange zu bieten. Dabei wird jedoch bevorzugt, die als Mikrowellenhohlleiter ausgebildete Komponente des mehrkomponentigen Rohres einer erfindungsgemäßen Sitzstange in zumindest eine in radialer Richtung weiter außen angeordnete zusätzliche Rohrkomponente einzubetten, deren äußerer Querschnitt wie gewünscht ausgebildet und gegebenenfalls zusätzlich in axialer Richtung variabel ist. Diese zumindest eine zusätzliche Komponente könnte etwa der Form eines natürlichen Asts eines Baumes oder Strauches nachgebildet sein. Die zumindest eine zusätzliche Rohrkomponente ist dabei vorzugsweise aus einem nicht leitenden Material ausgebildet und/oder von der als Mikrowellenhohlleiter ausgebildeten Komponente elektrisch isoliert. Die als Mikrowellenhohlleiter ausgebildete Komponente kann etwa in die eine zumindest zusätzliche Rohrkomponente eingesetzt oder eingeschoben werden. Alternativ könnte die zumindest eine zusätzliche Rohrkomponente als Beschichtung auf der als Mikrowellenhohlleiter ausgebildeten Komponenten aufgebracht sein. Des Weiteren ist auch eine Ausgestaltung möglich, bei der die als Mikrowellenhohlleiter ausgebildete Komponente auf die innerste Komponente aus einem dielektrischen Material in Form einer leitfähigen (metallischen) Beschichtung aufgebracht ist. Zum Schutz der Beschichtung wird dann vorgeschlagen, dass eine entsprechende erfindungsgemäße Sitzstange zumindest eine weitere äußere Rohrkomponente aufweist, die die innerste dielektrische Komponente mit der äußeren leitfähigen Beschichtung umfasst. Die zumindest eine weitere äußere Rohrkomponente kann selbst etwa wiederum als Beschichtung auf die leitfähige Beschichtung aufgebracht sein. Alternativ kann es sich bei der zumindest einen weiteren äußeren Rohrkomponenten auch um ein Rohr handeln, das ein- oder mehrkomponentig aufgebaut ist, wobei z. B. die innerste dielektrische Komponente mit der äußeren leitfähigen Beschichtung in das Innere der zumindest weiteren äußeren Rohrkomponente eingeschoben werden kann. Weist die zumindest eine weitere äußere mehrkomponentige Rohrkomponente zumindest eine leitfähige (metallische) Komponente auf, so ist diese adäquat von der leitfähigen äußeren Beschichtung der innersten dielektrischen Rohrkomponente der Sitzstange zu isolieren.

In die in der Hochfrequenztechnik gebräuchlichen Typen von Hohlleitern wird üblicherweise Mikrowellenstrahlung der Frequenz eingekoppelt, die gemäß der Querschnittsgeometrie und der Querschnittsgröße des Hohlleiters die Grundmode entsprechenden Hohlleitertyps darstellt, um die Dämpfung der Mikrowellenstrahlung bei der Ausbreitung im Hohlleiter (gegenüber weiteren, gemäß der Querschnittsgeometrie und der Querschnittsgröße möglichen Moden höherer Ordnung) so gering wie möglich zu halten. Bei diesen Moden ist die Feldstärke typischerweise im Zentrum des Hohlleiterquerschnitts maximal, womit ebenso der Energieübertrag an ein mit der Mikrowellenstrahlung in dem Hohlleiter in Wechselwirkung stehenden dielektrischen Mediums wie etwa Wasser im Zentrum des Hohlleiters maximal ist. Die Parasiten, denen eine erfindungsgemäße Sitzstange als Versteck dient, sitzen an die den zentralen Innenraum der Sitzstange radial umgebenden inneren Wandung der Sitzstange. Würde eine erfindungsgemäße Sitzstange lediglich aus einem rohrförmigen Hohlleiter bestehen, befänden sich die Parasiten dann in den schwachen, äußeren Feldstärkeregionen der in den Hohlleiter eingekoppelten oder einkoppelbaren Mikrowellenstrahlung. Es ist dann nicht auszuschließen, dass die Parasiten gegebenenfalls vor der tödlichen Wirkung der eingekoppelten oder einkoppelbaren Mikrowellenstrahlung fliehen können, z. B., in dem sie die Temperaturerhöhung der körpereigenen wasserbasierten Flüssigkeiten durch die Mikrowellenstrahlung bemerken, bevor die Mikrowellenstrahlung den beabsichtigten tödlichen Effekt hat. Daher ist es nötig, den Aufenthaltsort der Parasiten, also die den zentralen Innenraum der Sitzstange radial umgebende innere Wandung, näher an die Bereiche mit höherer Feldstärke im Zentrum des Hohlleiters heranzurücken. Eine Verkleinerung des Hohlleiterquerschnitts kann dieses Problem offensichtlich nicht lösen, jedoch zumindest eine weitere, nicht leitende und damit nicht als Hohlleiter ausgebildete oder ausbildbare Rohrkomponente im Inneren der als Mikrowellenhohlleiter ausgebildeten Rohrkomponente der Sitzstange. Die nicht leitende Rohrkomponente besteht vorzugsweise aus einem dielektrischen Festkörpermaterial mit einem möglichst geringen dielektrischen Verlustfaktor und Standfähigkeit über einen längeren Zeitraum (wenigstens mehrere 10 min) bei Exposition des Materials gegenüber Mikrowellenstrahlung ohne Beschädigung oder gar Zerstörung der dielektrischen Rohrkomponente(n).

Um die Tötungsrate der Parasiten zu erhöhen, ist es zweckmäßig, die Ausbreitung von Mikrowellenstrahlung im Mikrowellenhohlleiter in Rotation zu versetzen, die Mikrowellenstrahlung also zirkular bzw. im Allgemeinen elliptisch zu polarisieren. Zirkulare oder allgemein elliptische Polarisation ist durch verschiedene Maßnahmen realisierbar. Zum einen kann eine entsprechende Polarisation durch gezielte Deformation (Übergang) eines Mikrowellenhohlleiters von einem kreisrunden Querschnitt auf einen ellipsenförmigen Querschnitt erzeugt werden. Eine weitere Möglichkeit ist ein (abrupter) Übergang von einem rechteckförmigen Mikrowellenhohlleiter zu einem Mikrowellenhohlleiter mit kreisförmigem oder elliptischen Querschnitt, wobei an der Stelle des Übergangs eine Lochblende als Zirkularperformer angeordnet ist. Durch Vorsehen einer Rotation von Mikrowellenstrahlung bei der Propagation von Mikrowellenstrahlung durch eine erfindungsgemäße Sitzstange kann die Effektivität einer solchen Sitzstange noch weiter gesteigert werden.

Mehrere erfindungsgemäße Sitzstangen können in axialer Richtung miteinander verbunden werden, wobei Mikrowellenstrahlung von einer Sitzstange in eine in axialer Richtung angrenzende Sitzstange eingekoppelt werden kann und der Übergang zwischen mikrowellenführenden verbundenen Sitzstangen bevorzugt so ausgebildet ist, das der Übergang möglichst verlustarm ist. Dazu sind die Mikrowellenhohlleiter axial benachbarter Sitzstangen vorzugsweise identisch ausgebildet, insbesondere hinsichtlich der inneren Querschnittsform wie auch der Querschnittsgröße und des dielektrischen Festkörpermaterials der innersten Rohrkomponente. Anderenfalls wird die Verwendung von Übergangshohlleiterelementen und/oder Verbindungshohlleiterelementen vorgeschlagen, die zwischen benachbarten erfindungsgemäßen Sitzstangen angeordnet werden und eine möglichst verlustarme Übertragung der Mikrowellenstrahlung von einer Sitzstange in die andere, benachbarte Sitzstange ermöglichen. Übergangshohlleiterelemente können jedoch auch benachbarte erfindungsgemäße Sitzstangen miteinander verbinden, die nicht axial benachbart sind, sondern deren zentrale Symmetrieachsen einen ebenen Winkel oder auch einen Raumwinkel miteinander einschließend. Das Übergangshohlleiterelement ist dazu entsprechend gekrümmt oder etwa als flexibler, mikrowellenführender Schlauch ausgebildet. Damit können komplexe Systeme von miteinander verbundenen erfindungsgemäßen Sitzstangen aufgebaut werden, wobei das gesamte System jedoch lediglich eine ausreichend leistungsfähige Mikrowellenstrahlungsquelle benötigt, von der aus an einem Anfangspunkt des Systems die Mikrowellenstrahlung in das System eingekoppelt wird und das gesamte System bis zu einem von der Mikrowellenstrahlungsquelle entfernten Ende mit Mikrowellenenergie versorgt wird. Wesentlich ist dabei, das jede Verbindung erfindungsgemäßer Sitzstangen untereinander und/oder erfindungsgemäßer Sitzstangen mit Übergangshohlleiterelementen und/oder Verbindungshohlleiterelementen mikrowellendicht ausgestaltet ist, d. h., keine Mikrowellenstrahlung in die Umgebung gelangt. Entsprechende mikrowellenstrahlungsdichte Kupplungen sind dem Fachkundigen aus dem Stand der Hochfrequenztechnik bekannt.

In einer bevorzugten Ausgestaltungsvariante einer erfindungsgemäßen Sitzstange ist ein erster, innerer Komponententyp des mehrkomponentigen Rohres als Beschichtung und/oder Inliner auf der Innenseite eines zweiten Komponententyps des mehrkomponentigen Rohres aufgebracht.

Nach einer weiteren bevorzugten Ausgestaltungsvariante einer erfindungsgemäßen Sitzstange ist der zweite Komponententyp des mehrkomponentigen Rohres als metallisches Rohr ausgebildet.

Eine zusätzliche präferierte Ausgestaltungsvariante einer erfindungsgemäßen Sitzstange sieht vor, dass ein erster innerer Komponententyp des mehrkomponentigen Rohres als ein- oder mehrteilig ausgestalteter rohrförmiger Einschub in einen zweiten Komponententyp des mehrkomponentigen Rohres ausgebildet ist.

Bei einer zusätzlichen begünstigten Ausgestaltungsvariante einer erfindungsgemäßen Sitzstange ist ein erster innerer Komponententyp des mehrkomponentigen Rohres als ein- oder mehrteilig ausgestalteter rohrförmiger Einschub in einen zweiten Komponententyp ausgebildet ist, der mit einem als Beschichtung und/oder Inliner ausgebildeten weiteren identischen oder verschiedenen ersten Komponententyp des mehrkomponentigen Rohres auf seiner Innenseite versehen ist.

Es wird vorgeschlagen, dass zumindest ein erster Komponententyp des mehrkomponentigen Rohres einer erfindungsgemäßen Sitzstange aus PTFE ("Teflon"), ein Polyethylen oder aus einem keramischen Werkstoff ausgebildet ist. Diese Werkstoffe weisen einen geringen dielektrischen Verlustfaktor aus und sind hinreichend widerstandsfähig auch gegenüber einer gewissen unvermeidlichen Erwärmung aufgrund von Einkopplung von Mikrowellenstrahlung in die als Mikrowellenhohlleiter ausgebildete Rohrkomponente der Sitzstange.

Gemäß einer besonders präferierten Ausgestaltungsvariante einer erfindungsgemäßen Sitzstange sind die Ausnehmungen im mehrkomponentigen Rohr derart angeordnet und Mikrowellenstrahlung wird so in das Rohr eingebracht oder ist so einbringbar, dass im Bereich der Ausnehmungen in den leitfähigen und den Mikrowellenhohlleiter ausbildenden Komponenten des mehrkomponentigen Rohres keine durch die Mikrowellenstrahlung induzierten Längsströme auftreten. Anderenfalls, also wenn Ausnehmungen gerade in Bereichen angeordnet sind, wo in den inneren Hohlleiterwänden Längsströme induziert werden, kann sich eine Schlitzantenne ausbilden und Mikrowellenstrahlung in den Außenraum abgestrahlt werden. Sofern die Ausnehmungen jedoch für eine Abstrahlung von Mikrowellenstrahlung in den Außenraum gegenüber der Hohlleiterwellenlänge der in die als Mikrowellenhohlleiter ausgebildeten Komponente des mehrkomponentigen Rohres eingekoppelte Mikrowellenstrahlung zu klein sind, würden diese dennoch die Oberflächenströme auf der inneren Hohlleiteroberfläche stören und die Dämpfung der Mikrowellenstrahlung in der als Mikrowellenhohlleiter ausgebildeten Rohrkomponente erhöhen.

In einer besonders bevorzugten Ausgestaltungsvariante einer erfindungsgemäßen Sitzstange beträgt der maximale Durchmesser der Ausnehmungen im mehrkomponentigen Rohr höchstens ein Zehntel, vorzugsweise ein Zwanzigstel, der Hohlleiterwellenlänge der in das Rohr eingebrachten oder einbringbaren Mikrowellenstrahlung. Damit ist sichergestellt, dass keine Mikrowellenstrahlung aus der Sitzstange in die Umgebung gelangen kann.

Nach einer besonders begünstigten Ausgestaltungsvariante einer erfindungsgemäßen Sitzstange sind benachbarte Ausnehmungen in einem Abstand von 5 cm bis 25 cm, bevorzugt 10 cm bis 20 cm und besonders bevorzugt 12,5 cm bis 17,5 cm, angeordnet. Damit sich sichergestellt, dass der Weg von Parasiten nach dem Befall eines auf der Sitzstange befindlichen Vogels durch eine der Ausnehmungen in das Innere einer erfindungsgemäßen Sitzstange hinreichend kurz ist, so dass die Parasiten regelmäßig das Innere der Sitzstange als naheliegendes Versteck aufsuchen werden.

Die am Häufigsten in der Nutztierhaltung gehaltenen Vögel sind Hühnervögel. Dabei werden typischerweise konventionelle Sitzstangen mit kreisrundem Querschnitt mit einem Durchmesser von 32 mm verwendet. Bei einem entsprechenden Hohlleiterinnenquerschnitt eines kreisrunden Hohlleiters beträgt die minimale Frequenz der H₁₁-Grundmode 5,49 GHz, nahe der in der Hochfrequenztechnik gebräuchlichen und zugelassenen Frequenz von 5,8 GHz, und die maximale Frequenz 10 GHz. Für die Frequenz von 5,8 GHz sind kommerziell Hochfrequenzbauelemente wie Hohlleiter, jedoch insbesondere auch entsprechende Vorrichtungen zur Erzeugung von Mikrowellenstrahlung, etwa ein Magnetron, erhältlich. Eine besonders begünstigte Ausgestaltungsvariante einer erfindungsgemäßen Sitzstange sieht daher vor, dass das mehrkomponentige Rohr zur Führung einer Mikrowellenstrahlung mit einer Frequenz von 5,8 GHz ausgebildet ist. Gemäß einer weiteren besonders begünstigten Ausgestaltungsvariante einer erfindungsgemäßen Sitzstange weist die den Mikrowellenhohleiter ausbildende Komponente des mehrkomponentigen Rohres einen kreisförmigen Querschnitt mit einem Innendurchmesser von 36 mm auf.

In einer weiteren besonders bevorzugten Ausgestaltungsvariante einer erfindungsgemäßen Sitzstange weist die innerste radiale Komponente des mehrkomponentigen Rohres eine Dicke von mindestens 3 mm, bevorzugt 5 mm bis 10 mm auf und schließt sich an deren Innenseite direkt an die den Mikrowellenhohlleiter bildende Komponente des mehrkomponentigen Rohres an.

Bei einer erfindungsgemäßen Anlage zur Bekämpfung von milbenartigen oder lausartigen parasitären Lebensformen bei Vögeln ist an zumindest einem der räumlich entfernen Orte eine erfindungsgemäße Sitzstange nach zumindest einer der in den vorstehenden Abschnitten beschriebenen Ausgestaltungsvarianten oder einer beliebigen Kombination von zwei oder mehr dieser Ausgestaltungsvarianten angeordnet, in die Mikrowellenstrahlung eingekoppelt wird oder einkoppelbar ist. Die Mittel zur Erzeugung von Mikrowellenstrahlung sind dabei vorzugsweise in einem Betriebsraum oder dergleichen räumlich getrennt von einer Stallung, einem Unterstand, einer Voliere oder dergleichen, in der eine oder mehrere erfindungsgemäße Sitzstangen und/oder ein System aus mehreren erfindungsgemäßen Sitzstangen, die zumindest teilweise untereinander verbunden sein können, angeordnet sind. Es wird vorgeschlagen, dass je nach Größe einer Stallung und der Anzahl der in der Stallung gehaltenen Vögel sind die Mittel zur Erzeugung von Mikrowellenstrahlung zur gleichzeitigen Bereitstellung von Mikrowellenstrahlung mit hinreichender Leistung zur Einkopplung in zumindest mehrere erfindungsgemäße Sitzstangen und/oder in zumindest ein System aus mehreren erfindungsgemäßen Sitzstangen, die zumindest teilweise untereinander verbunden sein können.

In einer zusätzlichen präferierten Ausgestaltungsvariante einer erfindungsgemäßen Anlage zur Bekämpfung von milbenartigen oder lausartigen parasitären Lebensformen bei Vögeln weist diese zumindest einen Zirkulator, zumindest eine Last mit wenigstens einer Detektordiode, zumindest einem Tuner, zumindest einem Standardhohlleiterelement, zumindest einem Übergang zwischen zwei Hohlleiterkomponenten mit unterschiedlich großer Querschnittsfläche und/oder unterschiedlich ausgebildeter Querschnittsform und mit zumindest einer Abschlusslast auf.

Nach einer weiteren besonders bevorzugten Ausgestaltungsvariante weist eine erfindungsgemäße Anlage des Weiteren wenigstens eine Weiche, Verzweigung oder dergleichen für Mikrowellenstrahlung auf.

Gemäß einer weiteren besonders präferierten Ausgestaltungsvariante einer erfindungsgemäßen Anlage zur Bekämpfung von milbenartigen oder lausartigen parasitären Lebensformen bei Vögeln umfasst diese zumindest eine Vorrichtung zur automatischen Abschaltung bei unbefugtem Eingriff, Beschädigung der Anlage oder wenigstens einem mikrowellenführenden Teil der Anlage, Störungen im Betriebsablauf oder dergleichen. Es ist davon auszugehen, dass eine erfindungsgemäße Anlage regelmäßig dort eingesetzt wird, wo keine Expertise hinsichtlich Hochfrequenztechnik vorhanden ist und es zum Beispiel auch nicht wirtschaftlich wäre, Mitarbeiter eines geflügelhaltenden, landwirtschaftlichen Betriebs in dieser Hinsicht aufwendig zu schulen. Es wird daher vorgeschlagen, dass eine derartige Anlage im Wesentlichen vollautomatisch betrieben wird und nur sehr wenige Steuerungsmöglichkeiten und/oder Eingriffsmöglichkeiten für nicht Fachkundige aufweist. Die Eingriffsmöglichkeit für nicht Fachkundige kann dabei lediglich auf einen "Not-Aus" der Anlage oder dergleichen als einzige Eingriffsmöglichkeit beschränkt sein. Dies setzt voraus, dass die Anlage selbst Mittel zur Erkennung von Störungen im Betriebsablauf und insbesondere auch von Beschädigungen an mikrowellenführenden Teilen der Anlage, die zum Austritt von Mikrowellenstrahlung aus dem beschädigten mikrowellenführenden Teil in die Umgebung führen, aufweist. Eine entsprechende beispielhafte Ausgestaltung wird im Rahmen der Besprechung eines Ausführungsbeispiels einer erfindungsgemäßen Anlage zur Bekämpfung von milbenartigen oder lausartigen parasitären Lebensformen bei Vögeln näher erläutert.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar. Zur Ausführung der Erfindung müssen nicht alle Merkmale des Anspruchs 1 und des Anspruchs 13 verwirklicht sein. Auch können einzelne Merkmale der unabhängigen Ansprüche durch andere offenbarte Merkmale oder Merkmalskombinationen ersetzt werden.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen, in welchen gleiche oder funktionsgleiche Elemente mit identischen Bezugszeichen versehen sind. Dabei zeigt:
- Fig. 1: eine schematische Querschnittsdarstellung einer ersten Ausgestaltungsvariante einer erfindungsgemäßen Sitzstange,
- Fig. 2: eine vereinfachte schematische Darstellung einer erfindungsgemäßen Anlage zur Bekämpfung von milbenartigen oder lausartigen parasitären Lebensformen bei Vögeln; und
- Fig. 3: eine schematische Längsschnittdarstellung eines Segments einer zweiten Ausgestaltungsvariante einer erfindungsgemäßen Sitzstange.

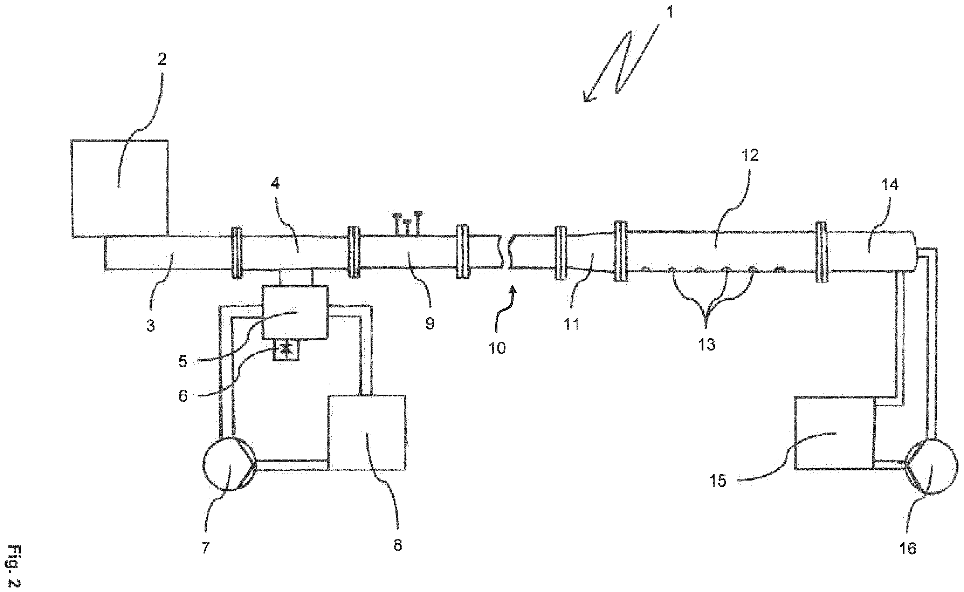

In Fig. 2 ist eine vereinfachte schematische Darstellung einer erfindungsgemäßen Anlage 1 zur Bekämpfung von milbenartigen oder lausartigen parasitären Lebensformen bei Vögeln abgebildet. Die Anlage 1 umfasst Mittel zur Erzeugung von Mikrowellenstrahlung 2, einen Hohlleiter-Launcher 3, einen Zirkulator 4, eine Wasserlast 5 mit Detektordiode 6 sowie Wasserbehälter 8 und Wasserpumpe 7, einen 3-Stift Hohlleitertuner 9, Hohlleiterverbindungsstücke 10, einen Hohlleiterübergang 11, eine erfindungsgemäße Sitzstange 12 für Vögel mit Ausnehmungen 13 an der Unterseite und eine Abschlusslast 14 mit einem Wasserbehälter 15 und einer Wasserpumpe 16.

Bei den Mitteln zur Erzeugung von Mikrowellenstrahlung 2 handelt es sich um eine kommerziell erhältliche Mikrowellenquelle 2, wie z. B. ein Magnetron 2 oder Halbleiterverstärker, für industrielle Anwendungen zur Erzeugung von Mikrowellenstrahlung von einer Frequenz von 5,8 GHz. Die von dem Magnetron 2 erzeugte Mikrowellenstrahlung wird mittels eines Hohlleiter-Launchers 3 in einen für die Frequenz der Mikrowellenstrahlung von 5,8 GHz entsprechend ausgebildeten Standard-Rechteckhohlleiter eingekoppelt.

An den Hohlleiter-Launcher 3 schließt sich ein Zirkulator 4 an, der aus der Richtung von dem Hohlleiter-Launcher 3 kommende Mikrowellenstrahlung durchlässt, jedoch aus der Gegenrichtung kommende, reflektierte Mikrowellenstrahlung in eine an einen anderen Ausgang des Zirkulators 4 angeschlossene Wasserlast 5 umlenkt. Dies dient unter anderem dem Schutz des Magnetrons 2 vor reflektierter Mikrowellenstrahlung. Die Wasserlast 5 dämpft die einfallende Mikrowellenstrahlung so weit, dass diese von einer Detektordiode 6 detektiert werden kann, wobei sich die Wasserlast durch Absorption zumindest eines Teils der einfallenden Mikrowellenstrahlungsenergie erwärmt. Es ist daher eine permanente Kühlung erforderlich, weshalb die Wasserlast 5 in einen Wasserkreislauf mit Wasserbehälter 8 und Wasserpumpe 7 integriert ist.

An den Zirkulator 4 ist als drittes Hochfrequenzbauteil neben dem Hohlleiter-Launcher 3 und der Wasserlast 5 mit Detektordiode 6 der 3-Stift Hohlleitertuner 9 angeschlossen, der eine Impedanzanpassung für das ganze Hohlleitersystem ermöglicht. Auf den Hohlleitertuner folgen Hohlleiterverbindungsstücke 10, die in der Fig. 2 aus Platzgründen nur teilweise angedeutet sind. Diese leiten die Mikrowellenstrahlung gegebenenfalls über eine längere Strecke von einem Betriebsraum in eine Stallung, einem Unterstand, einer Voliere oder dergleichen, in der Vögel gehalten werden und in der zumindest eine Sitzstange 12 angeordnet ist. Die Hohlleiterverbindungsstücke 10 können dabei auch gekrümmte oder flexible Hohlleiterelemente umfassen. Zwischen den Hohlleiterverbindungstücken 10 und der Sitzstange 12 ist ein Hohlleiterübergang 11 angeordnet, da sich beim Übergang aus den Hohlleiterverbindungsstücken 10 zur Sitzstange 12 die Hohlleitergeometrie verändert. Alle mikrowellenführenden Elemente bis einschließlich der Hohlleiterverbindungsstücke 10 sind als Rechteckhohlleiter ausgebildet, die Sitzstange 12 jedoch als Rundhohlleiter. Um einen möglichst verlustarmen Übergang von den Hohlleiterverbindungsstücken zur Sitzstange 12 zu gewährleisten, ist der Hohlleiterübergang 11 ähnlich einer Hornantenne ausgebildet und weist im Inneren einen kontinuierlichen Übergang vom Rechteckquerschnitt der Hohlleiterverbindungsstücke 10 zum Rundquerschnitt der Sitzstange 12 auf.

Die Sitzstange 12 ist in dem in Fig. 2 dargestellten Ausführungsbeispiel einer erfindungsgemäßen Anlage 1 zur Bekämpfung von milbenartigen oder lausartigen parasitären Lebensformen bei Vögeln als mehrkomponentiges Rohr 17 ausgebildet und steht stellvertretend für mehrere aufeinander folgende, miteinander verbundene Sitzstangen 12 oder ein ganzes System von sukzessive miteinander verbundenen Sitzstangen 12, das auch weitere Hohlleiterbauelemente wie gerade oder gekrümmte, flexible oder starre Hohlleiterbauelemente als mikrowellenführende Hohlleiterverbindungsstücke einschließt, die aus Gründen der Übersichtlichkeit und des zur Verfügung stehenden Platzes in Fig. 2 nicht dargestellt sind.

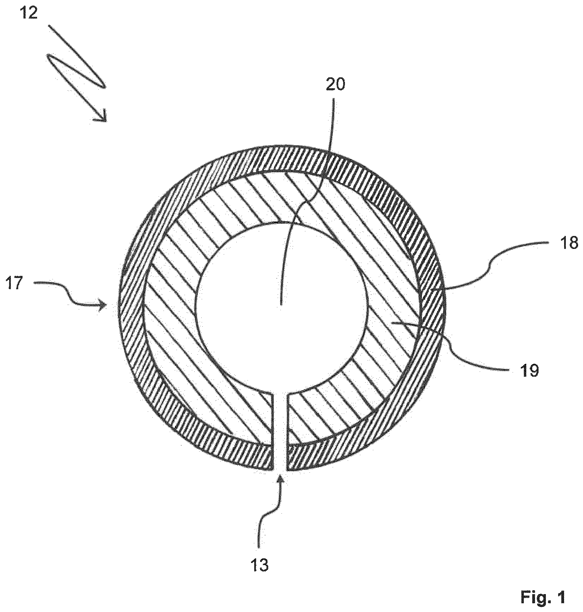

In Fig. 1 ist eine schematische Querschnittsdarstellung einer ersten Ausgestaltungsvariante einer derartigen Sitzstange 12 dargestellt. Die als mehrkomponentiges Rohr 17 ausgebildete Sitzstange 12 weist einen kreisrunden Querschnitt auf und besteht aus einem Metallrohr 18, das als Rundhohlleiter dient, mit einem Inliner 19 aus einem verlustarmen, dielektrischen Material, das als zweite, innere Rohrkomponente der Sitzstange 12 dient. Das Metallrohr 18 weist einen Außendurchmesser von 40 mm auf und ist damit als Sitzstange 12 etwa für Hühnervögel tauglich. Der Innendurchmesser des Metallrohres 18 beträgt 38 mm und die Dicke der inneren dielektrischen Beschichtung (Inliner) 19 des Metallrohres 7 mm, so dass der Durchmesser des zentralen Innenraums 20 der Sitzstange 24 mm beträgt. Die Sitzstange 12 weist an der Unterseite zahlreiche, in einem Abstand von 15 cm angeordnete, kreisförmige Löcher 13 mit einem Durchmesser von 3 mm auf, durch die Parasiten nach Befall eines oder mehrerer auf der Sitzstange befindlicher Vögel in das Innere 20 der Sitzstange 12 gelangen können, um sich zu verstecken und in Sicherheit zu wiegen.

An die Sitzstange 12 schließt sich eine Abschlusslast 14 an, um die an diesem Ende noch verbleibende Mikrowellenenergie der in die Sitzstange 12 eingekoppelten Mikrowellenstrahlung aufzunehmen und zurück laufende bzw. am Ende reflektierte Mikrowellenstrahlung so weit möglich zu vermeiden. Bei der Abschlusslast 14 handelt es sich um einen Keilabsorber mit einem kontinuierlichen Übergang von einem Rundhohlleiter, vom Innenquerschnitt her entsprechend dem der Sitzstange 12, zu einer Wasserlast, die die Mikrowellenenergie der verbleibenden Mikrowellenstrahlung aufnimmt und sich dabei erwärmt. Mit einer relativen Permittivität von etwa 80 ist Wasser besonders gut geeignet als Absorber vom Mikrowellenergie. Zugleich ist Wasser gut als Kühlmittel verwendbar. Die Wasserlast ist dabei von dem Hohlleiter durch eine Schicht dielektrischen Festkörpermaterials in Form eines pyramidalen Glaskolbens, abgetrennt. Die Wasserlast ist in einen Kühlkreislauf mit einem Wasserreservoir 15 und einer Pumpe 16 eingebunden, um die durch Absorption im Keilabsorber 14 aufgenommene Mikrowellenenergie in Form von Wärme abzuführen.

Für die Sicherheit von Mensch und Tier ist es von wesentlich, dass keine Mikrowellenstrahlung aus der Anlage 1 austritt. Werden Magnetron 2, Sitzstange 12 und Abschlusslast 14 sowie die weiteren, dazwischen angeordneten mikrowellenführenden Komponenten elektrisch leitend miteinander verbunden, bilden sie eine metallisch geschlossene und damit mikrowellendichte Einheit. Trotzdem müssen Fehler und/oder Beschädigungen der Anlage 1 bzw. von Teilen der Anlage 1 wie etwa das Fehlen der Abschlusslast 14 oder etwa nicht verbundene, beschädigte oder leckende mikrowellenführende Komponenten sofort erkannt und entsprechend reagiert werden, um einen Austritt von Mikrowellenstrahlung in die Umgebung gänzlich zu verhindern oder zumindest in kürzester Zeit nach Auftritt eines Schadens abzustellen. Die Energie reflektierter Mikrowellenstrahlung kann, wie bereits vorstehend angedeutet, an der an einem der drei Anschlüsse des Zirkulators 4 angeordneten Wasserlast 5 mit Detektordiode 6 abgegriffen werden. Mit einer impedanzangepassten Abschlusslast 14 wird die gesamte Hohlleiterstrecke vom Hohlleiter-Launcher 3 über den Zirkulator 4, den Hohlleitertuner 9, die Hohlleiterverbindungsstücke 10 und das Hohlleiterübergangsstück 11 zu der Sitzstange 12 reflexionsfrei abgeschlossen. Jegliche Veränderung der Mikrowellenstrecke führt nun zu einer Veränderung der Impedanz entlang der Hohlleiterstrecke, die Reflexionen von Mikrowellenstrahlung hervorruft. Diese werden an der Detektordiode 6 registriert und das Magnetron 2 kann daraufhin abgeschaltet werden. Zur weiteren Sicherheit kann die an der Abschlusslast ankommende Mikrowellenenergie detektiert werden. Dies kann entweder über eine in der Abschlusslast 14 verbaute weitere Detektordiode oder durch einen vorgeschalteten Richtkoppler geschehen (beides in Fig. 1 nicht explizit dargestellt). Da sich die Dämpfung der Mikrowellenstrahlung entlang der Hohlleiterstrecke nicht wesentlich verändert, müssen die vom Magnetron 2 generierte und die am Ende an der Abschlusslast 14 ankommende Leistung der Mikrowellenstrahlung eine direkte Proportionalität aufweisen.

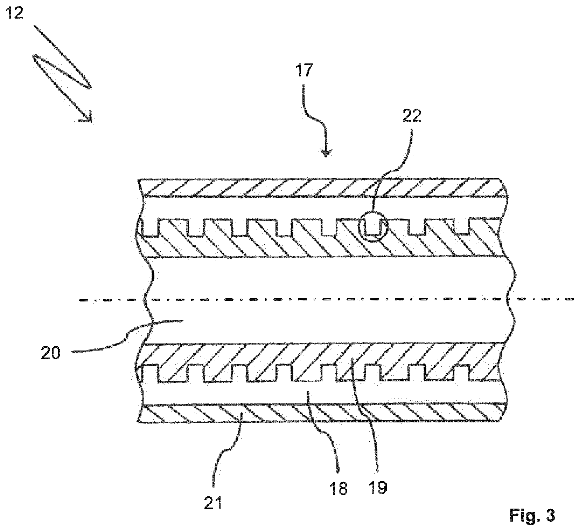

In Figur 3 ist eine schematische Längsschnittdarstellung eines Segments einer weiteren, zweiten Ausgestaltungsvariante einer erfindungsgemäßen Sitzstange 12 dargestellt. Auch diese zweite Ausgestaltungsvariante einer erfindungsgemäßen Sitzstange 12 ist aus einem mehrkomponentigen Rohr 17 von kreisrundem Querschnitt gebildet. Die Sitzstange 12 besteht ebenfalls aus einem Metallrohr 18, welches als Rundhohlleiter für Mikrowellenstrahlung ausgebildet ist, und einem Inliner 19 aus einem verlustarmen, dielektrischen Material. Das Metallrohr 18 ist innenseitig geriffelt, wobei die Zwischenräume zwischen den die Riffelung bildenden, radial um die Rohrachse umlaufenden Stegen 22 von dem Inliner 19 ausgefüllt sind. Diese Ausgestaltung ermöglicht eine besonders verlustarme Führung bzw. Ausbreitung von Mikrowellenstrahlung in der Sitzstange 12. Zudem ist das Metallrohr 18 außenseitig umlaufend noch mit einer Hülle 21 aus einem Kunststoffmaterial umgeben.

### Bezugszeichenliste

- 1.: Anlage zur Bekämpfung von milbenartigen oder lausartigen parasitären Lebensformen bei Vögeln
- 2.: Magnetron
- 3.: Hohlleiter-Launcher
- 4.: Zirkulator
- 5.: Wasserlast
- 6.: Detektordiode
- 7.: Wasserpumpe
- 8.: Wasserbehälter
- 9.: Hohlleitertuner
- 10.: Hohlleiterverbindungsstücke
- 11.: Hohlleiterübergang
- 12.: Sitzstange
- 13.: Ausnehmungen
- 14.: Abschlusslast
- 15.: Wasserbehälter
- 16.: Wasserpumpe
- 17.: Mehrkomponentiges Rohr
- 18.: Metallrohr
- 19.: Inliner
- 20.: Zentraler Innenraum
- 21.: Hülle aus Kunststoff
- 22.: Umlaufender Steg (innenseitige Riffelung vom Metallrohr)

## Patentansprüche

1. Sitzstange (12) für zumindest einen Vogel zur Verwendung in einer Anlage (1) zur Bekämpfung von milbenartigen oder lausartigen Parasiten bei Vögeln mittels Mikrowellenstrahlung, **gekennzeichnet durch** einen Mikrowellenhohlleiter in Form eines mehrkomponentigen Rohres (17), dessen Querschnitt in radialer Richtung aus zumindest zwei Komponenten unterschiedlichen Festkörpermaterials gebildet ist, wobei zumindest ein erster Komponententyp aus einem dielektrischen Festkörpermaterial gebildet wird und ein weiterer, zweiter Komponententyp aus einem elektrisch leitfähigen Material gebildet wird und wobei die innerste radiale Komponente des Rohres (17) eine Komponente vom ersten Typ ist und sich zumindest eine Ausnehmung von einem Außenraum in einen freien, zentralen Innenraum (20) des Rohres erstreckt und die Ausnehmung (13) einen Querschnitt aufweist, der verhindert, dass Mikrowellenstrahlung aus dem Rohr (17) in die Umgebung gelangt.

2. Sitzstange nach Anspruch 1, **dadurch gekennzeichnet, dass** ein erster, innerer Komponententyp als Beschichtung und/oder Inliner (19) auf der Innenseite eines zweiten Komponententyps aufgebracht ist.

3. Sitzstange nach zumindest einem der Ansprüche 1 oder 2, **dadurch gekennzeichnet, dass** das der zweite Komponententyp als metallisches Rohr (18) ausgebildet ist.

4. Sitzstange nach zumindest einem der Ansprüche 1 bis 3, **dadurch gekennzeichnet, dass** ein erster innerer Komponententyp als ein- oder mehrteilig ausgestalteter rohrförmiger Einschub in einen zweiten Komponententyp ausgebildet ist.

5. Sitzstange nach zumindest einem der Ansprüche 1 bis 4, **dadurch gekennzeichnet, dass** ein erster innerer Komponententyp als ein- oder mehrteilig ausgestalteter rohrförmiger Einschub in einen zweiten Komponententyp ausgebildet ist, der mit einem als Beschichtung und/oder Inliner (19) ausgebildeten weiteren identischen oder verschiedenen ersten Komponententyp auf seiner Innenseite versehen ist.

6. Sitzstange nach zumindest einem der Ansprüche 1 bis 5, **dadurch gekennzeichnet, dass** zumindest ein erster Komponententyp aus PTFE ("Teflon"), ein Polyethylen oder einem keramischen Werkstoff ausgebildet ist.

7. Sitzstange nach zumindest einem der Ansprüche 1 bis 6, **dadurch gekennzeichnet, dass** die Ausnehmungen (13) im mehrkomponentigen Rohr (17) derart angeordnet sind und Mikrowellenstrahlung so in das Rohr (17) eingebracht wird oder einbringbar ist, das im Bereich der Ausnehmungen (13) in den leitfähigen und den Mikrowellenhohlleiter ausbildenden Komponenten des mehrkomponentigen Rohres (17) keine durch die Mikrowellenstrahlung induzierten Längsströme auftreten.

8. Sitzstange nach zumindest einem der Ansprüche 1 bis 8, **dadurch gekennzeichnet, dass** der maximale Durchmesser der Ausnehmungen (13) im mehrkomponentigen Rohr (17) höchstens einem Sechzehntel, vorzugsweise höchstens einem Dreißigstel, der Hohlleiterwellenlänge der in das Rohr (17) eingebrachten oder einbringbaren Mikrowellenstrahlung entspricht.

9. Sitzstange nach zumindest einem der Ansprüche 1 bis 8, **dadurch gekennzeichnet, dass** benachbarte Ausnehmungen (13) in einem Abstand von 5 cm bis 25 cm, bevorzugt 10 cm bis 20 cm und besonders bevorzugt 12,5 cm bis 17,5 cm, angeordnet sind.

10. Sitzstange nach zumindest einem der Ansprüche 1 bis 9, **dadurch gekennzeichnet, dass** die den Mikrowellenhohleiter ausbildende Komponente des mehrkomponentigen Rohres (17) zur Führung einer Mikrowellenstrahlung mit einer Frequenz von 5,8 GHz ausgebildet ist.

11. Sitzstange nach Anspruch 10, **dadurch gekennzeichnet, dass** die den Mikrowellenhohleiter ausbildende Komponente des mehrkomponentigen Rohres (17) einen kreisförmigen Querschnitt mit einem Innendurchmesser von 36 mm aufweist.

12. Sitzstange nach Anspruch 11, **dadurch gekennzeichnet, dass** das die innerste radiale Komponente des mehrkomponentigen Rohres (17) eine Dicke von mindestens 3 mm, bevorzugt 5 mm bis 10 mm aufweist und sich an deren Innenseite direkt an die den Mikrowellenhohlleiter bildende Komponente anschließt.

13. Anlage (1) zur Bekämpfung von milbenartigen oder lausartigen parasitären Lebensformen bei Vögeln, insbesondere bei in der Nutztierhaltung in Zuchtbetrieben, Mastbetrieben, vogeleiproduzierenden Betrieben oder dergleichen gehaltenen Vögeln, unter Verwendung von Mikrowellenstrahlung mit zumindest einer Vorrichtung zur Erzeugung von Mikrowellenstrahlung (2) und Mitteln (3, 4, 9, 10, 11) zur Führung von Mikrowellenstrahlung von dem Mittel zur Erzeugung von Mikrowellenstrahlung (2) zu einem oder mehreren von dem Mittel zur Erzeugung von Mikrowellenstrahlung (2) räumlich entfernen Orten, **dadurch gekennzeichnet, dass** an zumindest einem der räumlich entfernen Orte eine Sitzstange (12) nach zumindest einem der vorhergehenden Ansprüche 1 bis 12 angeordnet ist, in die Mikrowellenstrahlung eingekoppelt wird oder einkoppelbar ist.

14. Anlage zur Bekämpfung von milbenartigen oder lausartigen parasitären Lebensformen bei Vögeln nach Anspruch 13, **gekennzeichnet durch** zumindest einen Zirkulator (4), zumindest eine Last (5) mit wenigstens einer Detektordiode (6), zumindest einem Tuner (9), zumindest einem Standardhohlleiterelement (10), zumindest einem Übergang (11) zwischen zwei Hohlleiterkomponenten mit unterschiedlich großer Querschnittsfläche und/oder unterschiedlich ausgebildeter Querschnittsform und mit zumindest einer Abschlusslast (14).

15. Anlage zur Bekämpfung von milbenartigen oder lausartigen parasitären Lebensformen bei Vögeln nach zumindest einem der Ansprüche 13 und 14, **gekennzeichnet durch** zumindest eine Vorrichtung zur automatischen Abschaltung bei unbefugtem Eingriff, Beschädigung der Anlage oder wenigstens einem mikrowellenführenden Teil der Anlage, Störungen im Betriebsablauf oder dergleichen.
